**Europäisches Patentamt**

**European Patent Office**

**Office européen des brevets**

(19)

(11) Veröffentlichungsnummer: **0 179 327 B1**

(12)

# EUROPÄISCHE PATENTSCHRIFT

(45) Veröffentlichungstag der Patentschrift:
28.12.88

(21) Anmeldenummer: **85112548.4**

(22) Anmeldetag: **03.10.85**

(51) Int. Cl.⁴: **G 01 B 17/00**

(54) **Sensorsystem zur Untersuchung der Lage und/oder der Kontur eines Objekts mittels Ultraschall.**

(30) Priorität: **17.10.84 DE 3438038**

(43) Veröffentlichungstag der Anmeldung:
**30.04.86 Patentblatt 86/18**

(45) Bekanntmachung des Hinweises auf die Patenterteilung:
**28.12.88 Patentblatt 88/52**

(84) Benannte Vertragsstaaten:
**AT CH DE GB IT LI**

(56) Entgegenhaltungen:
**FR-A- 1 397 208**
**US-A- 4 297 602**

**ELECTRONIC DESIGN, Band 31, Nr. 11, Mai 1983, Seite 77E, Rochelle Park, New York, US; "Piezo polymer promises low-cost robotic sensors"**
**IBM TECHNICAL DISCLOSURE BULLETIN, Band 10, Nr. 12, Mai 1968, Seite 1829, New York, US; D.R. MILLS et al.: "Acoustical badge reader"**
**REVIEW OF SCIENTIFIC INSTRUMENTS, Band 48, Nr. 7, Juli 1977, Seiten 920-922, New York, US; S. KOVNOVICH et al.: "Surface-acoustic-wave film thickness monitor"**
**SOVIET INVENTIONS ILLUSTRATED, Derwent Publications Ltd., sections P,Q: General/Mechanical, Woche B22, Zusammenfassung E8546B/22, 11. Juli 1979**

(73) Patentinhaber: **Siemens Aktiengesellschaft Berlin und München, Wittelsbacherplatz 2, D-8000 München 2 (DE)**

(72) Erfinder: **Fritz, Harald, Dipl.-Ing. (FH), Hebelstrasse 5, D-7517 Waldbronn 3 (DE)**
Erfinder: **Wurll, Peter, Dipl.-Ing., Kärcherstrasse 60, D-7500 Karlsruhe (DE)**

## Beschreibung

Die Erfindung bezieht sich auf ein Sensorsystem mit einem im Bereich eines Ultraschallfeldes angeordneten, zu untersuchenden Objekt mit den Merkmalen des Oberbegriffs des Anspruchs 1.

Es ist bekannt (P. Kleinschmidt, V. Mágori: «Ultrasonic Remote Sensors for Noncontact Object Detection», Siemens Forschungs- und Entwicklungs-Berichte Bd. 10 (1981), Nr. 2, Springer-Verlag 1981), die von einem Ultraschallgeber in einem Freifeld auf das zu untersuchende Objekt abgestrahlten Schallwellen hinsichtlich der vom Objekt verursachten Echos zu untersuchen. Bei dieser Anordnung geben die Amplituden- und Laufzeitunterschiede der reflektierten Echosignale Aufschluss über die Entfernung des Objekts vom Ultraschallsender. Die Anordnung ist ganz darauf abgestellt, kontaktlose Untersuchungen des Objekts vorzunehmen, wodurch eine entsprechende Anordnung von Ultraschallgeber und -empfänger sowie das entsprechende Auswerteverfahren vorgegeben ist.

Der Erfindung liegt die Aufgabe zugrunde, ein Sensorsystem zur Untersuchung der Lage und/oder der Kontur eines Objekts mittels Ultraschall zu schaffen, bei dem die Objektuntersuchung bei mechanischem Kontakt des Objekts mit dem Sensorsystem durchgeführt werden kann.

Zur Lösung dieser Aufgabe weist das Sensorsystem der eingangs genannten Art erfindungsgemäss die Merkmale des Kennzeichens des Anspruchs 1 auf. Mit dem erfindungsgemässen Sensorsystem wird in vorteilhafter Weise der Übertragungsweg des Ultraschalls in einen festen, als Objektträger dienenden Körper verlegt, der beispielsweise Bestandteil einer Greifzange eines Handhabungsautomaten sein kann. Um die erforderliche Detektion des auf dem Objektträger aufliegenden Objekts du durchführen zu können, ist der Objektträger mit den zungenartigen Gebilden versehen, die vom Ultraschallgeber zu mechanischen Schwingungen angeregt werden. Der Ultraschallgeber ist in üblicher Weise fest an den Objektträger angekoppelt, so dass sich die von ihm hervorgerufenen mechanischen Schwingungen im Objektträger fortpflanzen können. Die zungenartigen Gebilde sind hierzu mit solchen konstruktiven Abmessungen zu versehen, dass ihre Eigenresonanzen in vorteilhafter Weise im Bereich der Grund- bzw. Oberwellenfrequenzen der Sendefrequenz des Ultraschallgebers liegen.

Weiterhin sind die zungenartigen Gebilde so an der Oberfläche des Objektträgers angeordnet, dass sich ihre mechanischen Schwingungen primär hinsichtlich der Schwingungsamplitude von einem auf dem Objektträger aufliegenden Objekt beeinflussen lassen. Somit ist erreicht, dass sich, für den Fall, dass sich die Schwingungen ungestört an den zungenartigen Gebilden ausbilden können, andere Übertragungsverhältnisse für die Ultraschallfrequenzen im Objektträger einstellen, als wenn diese Schwingungen durch ein Objekt oder Teilen davon gestört werden. Die im Objektträger auftretenden Resonanzen beeinflussen das Übertragungsverhalten des Objektträgers bekannterweise erheblich. Werden die verschiedenen zungenartigen Gebilde in ihren Abmessungen geringfügig variiert und beispielsweise rasterförmig über die Oberfläche des Objektträgers verteilt, so werden an jedem der zungenartigen Gebilde sich andere Resonanzen einstellen, wodurch sich unterschiedliche Beeinflussungen der verschiedenen Ultraschallfreuqenzen, abhängig von der Lage oder der Kontur eines aufliegenden Objekts, ergeben. Mit der angeschlossenen Auswerteeinheit ist somit nur noch eine Analyse der empfangenen Frequenzen, insbesondere hinsichtlich der Amplituden, notwendig. Eine absolute Bestimmung der Frequenzen und ihrer Amplituden ist in der Regel nicht notwendig, da über Vergleichsmessungen mit verschiedenen Objekten bzw. ohne Objekt eine Änderung der Übertragungsbedingungen im Objektträger detektiert werden kann, was zu hinreichenden Ergebnissen bei der Auswertung führt. Langfristige thermische Änderungen, die ebenfalls das Übertragungsverhalten beeinflussen, führen somit zu keinen Fehlern.

Die messtechnische Ausnutzung von Resonanzschwingungen und deren Beeinflussung ist beispielsweise in «Technisches Messen», 51. Jahrgang, 1984, Heft 9, Seiten 324 bis 328 beschrieben. Hier ist ein Grenzschalter für Flüssigkeiten mit einem mechanische Schwingungen ausführenden System ausgestattet, dessen Resonanzverhalten sich beim Eintauchen in eine Flüssigkeit ändert. Durch eine Analyse von Frequenz und Amplitude der auftretenden Schwingungen kann eine Aussage über das Dämpfungsverhalten und somit über den Flüssigkeitsstand gewonnen werden.

Es ist weiterhin für sich bereits bekannt, Messungen der Ultraschallresonanzstellen an festen Körpern und anschliessende Frequenzanalyse durchzuführen (J. Krautkrämer, H. Krautkrämer: «Werkstoffprüfung mit Ultraschall», 4. Auflage, Springer-Verlag 1980, Seiten 265 bis 269). Hierbei ist jedoch davon ausgegangen, dass Fehlstellen in einem Material dadurch detektiert werden können, dass Resonanzen auftreten, die bei Vergleichsmessungen mit einem Referenzmodell nicht auftreten. Dieses Messverfahren wird beispielsweise bei Dickenmessern in metallischen Rohren angewendet.

Vorteilhafte Ausgestaltungen der Erfindung sind in den Unteransprüchen angegeben.

Die Erfindung wird anhand der Figuren erläutert, wobei Figur 1 ein erstes Ausführungsbeispiel eines Objektträgers bei dem erfindungsgemässen Sensorsystem, Figur 2 ein zweites Ausführungsbeispiel eines Objektträgers sowie Figur 3 und Figur 4 einen Querschnitt durch weitere Ausführungsbeispiele eines Objektträgers mit einer elastischen Folie darstellen.

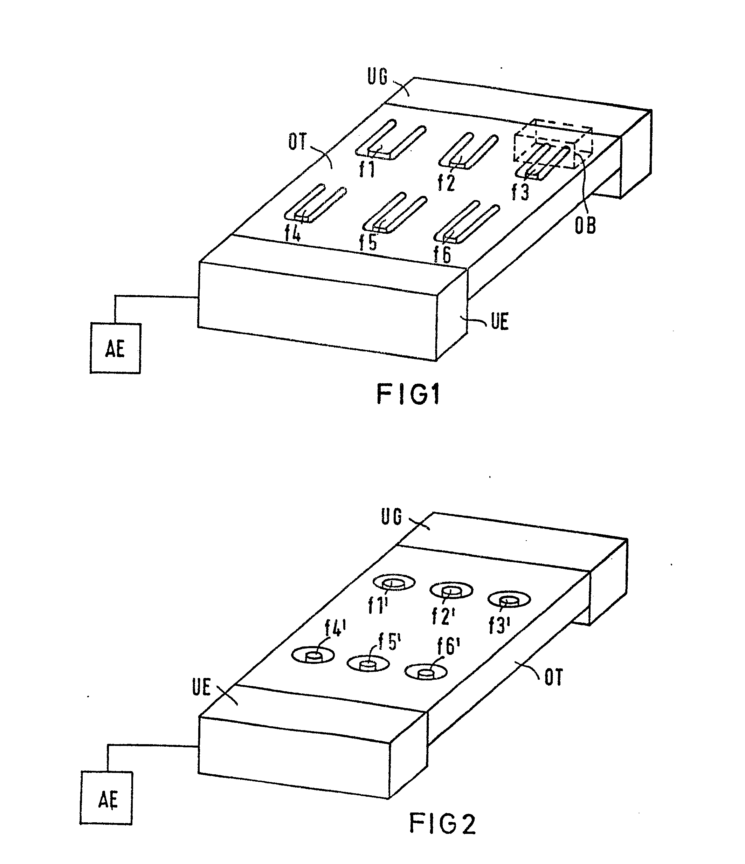

Die Figur 1 zeigt einen Ultraschallgeber UG, der beispielsweise auf einer festen Ultraschallfrequenz oder einer kontinuierlich durchstimmbaren Ultraschallfrequenz arbeitet. Bei einer weiteren Ausführungsform des Ultraschallgebers kann dieser auch als Impulsgeber aus einem aus einer Reihe von Einzelfrequenzen zusammengesetzten Impuls ausgebildet sein. Der Ultraschallgeber UG ist an einer Seite eines Objektträgers OT angebracht, an dessen gegenüberliegenden Seite der Ultraschallempfänger UE angeordnet ist, der so breitbandig hinsichtlich der Empfangsfrequenzen ausgelegt ist, dass er alle vom Ultraschallgeber ausgesendeten Einzelfrequenzen empfangen und in ein elektrisches Signal am Ausgang A umsetzen kann. Dieses Signal am Ausgang A wird mit einer Auswerteeinheit AE weiterverarbeitet.

In der Oberfläche des Objektträgers OT sind zungenartige Gebilde f1 ... f6 durch U-förmige Ausnehmungen gebildet. Diese U-förmigen Ausnehmungen sind durch den gesamten Querschnitt des Objektträgers OT geführt, so dass die zungenartigen Gebilde f1 ... f6 freischwingende Zapfen darstellen, die von den im Objektträger OT getragenen Ultraschallschwingungen des Ultraschallgebers UG zu mechanischen Schwingungen angeregt werden können. Bei einer vom Ultraschallgeber UG erzeugten Einzelfrequenz ist es vorteilhaft, die zungenartigen Gebilde mit geringen konstruktiven Unterschieden aufzubauen, so dass sich unterschiedliche Resonanzfrequenzen der einzelnen Gebilde f1, f2 und f3 ... f6 einstellen. Wenn ein zu untersuchendes Objekt OB auf der Oberfläche des Objektträgers OT aufliegt, werden die zungenartigen Gebilde (hier f3) in ihren mechanischen Schwingungen behindert, wodurch für diese Frequenz sich andere Übertragungsbedingungen im Objektträger OT einstellen. Mit der Auswerteeinheit AE braucht nur noch eine Analyse der Amplituden der Einzelfrequenzen durchgeführt zu werden, womit erkennbar ist, dass durch das Aufliegen des zu untersuchenden Objekts OB an der in der Figur gezeigten Stelle sich eine spezifische Veränderung der Amplitude der Resonanzfrequenz des zungenartigen Gebildes f3 ergibt.

Das Ausführungsbeispiel nach der Figur 2 ist in weiten Teilen mit dem Ausführungsbeispiel nach der Figur 1 identisch, jedoch sind hier die zungenartigen Gebilde durch rohrförmige Ausnehmungen im Objektträger OT gebildet. Aufgrund der rohrförmigen Ausnehmungen bleiben Stäbe f1' ... f6' als zungenartige Gebilde stehen, die in ihren Abmessungen so hergestellt sind, dass sich Resonanzfrequenzen im Bereich der Grund- bzw. Oberwellenfrequenzen des Ultraschallgebers einstellen. Ein auf dem Objektträger OT auf liegendes, zu untersuchendes Objekt beeinflusst hier in gleicher Weise wie bei dem Beispiel nach der Figur 1 die mechanischen Schwingungen der Stäbe f1', f2', f3', f4', f5' oder f6', wodurch sich auch hier eine Detektion der Lage des Objekts durchführen lässt.

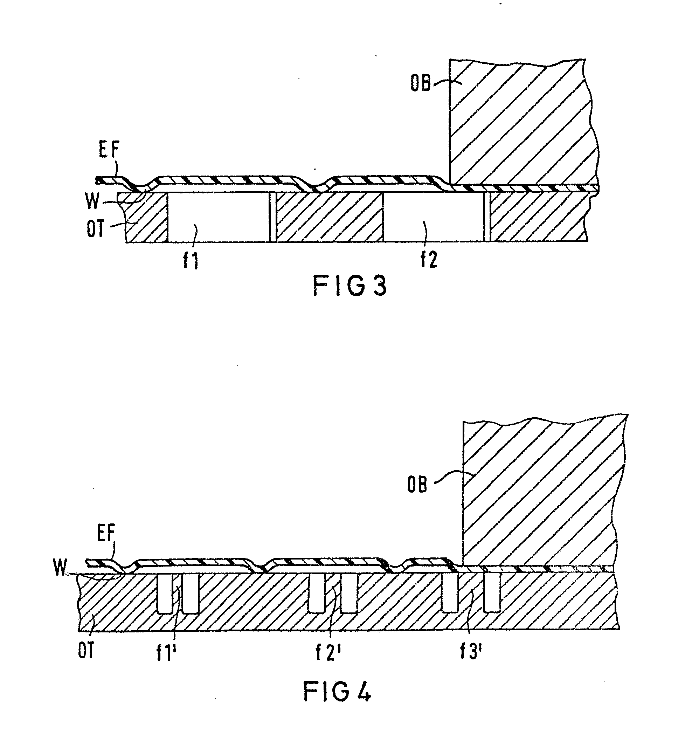

Bei dem in der Figur 3 und in der Figur 4 jeweils gezeigten Querschnitt durch den Objektträger OT liegt auf diesem eine elastische Folie EF mit noppenartigen Wölbungen W auf. Für den Fall, dass kein Objekt OB auf dem Objektträger OT aufliegt, können die Stäbe f1 bzw. f1'und f2' frei schwingen, wenn jedoch die elastische Folie EF durch die Belastung eines zu untersuchenden Objekts OB fest an den Objektträger OT angedrückt wird, erfolgt hieraus eine Dämpfung der Schwingung des Stabes f2 bzw. f3', womit sich für diese Resonanzfrequenz ein anderes Übertragungsverhalten im Objektträger OT ergibt.

**Patentansprüche**

1. Sensorsystem zur Untersuchung der Lage und/oder der Kontur eines Objekts mittels Ultraschall, wobei
— im Übertragungsweg zwischen Ultraschallgeber (UG) und -empfänger (UE) das zu untersuchende Objekt (OB) angeordnet ist, und
—mit einer Auswerteeinheit (AE) zur Analyse der durch das Objekt (OB) verursachten Beeinflussungen der Schallparameter, dadurch gekennzeichnet, dass
— das Objekt (OB) auf einem Objektträger (OT) aufliegt, an dessen Seiten sich gegenüberliegend der Ultraschallgeber (UG) und -empfänger (UE) angebracht sind, wobei
— der Übertragungsweg des Schalls durch den Objektträger (OT) parallel zur Auflagefläche des Objekts (OB) auf dem Objektträger (OT) verläuft, dass
— der Objektträger (OT) zungenartige Gebilde (f1 ... f6; f1' ... f6') aufweist, die mechanische Eigenschwingungen im Frequenzbereich des Ultraschallgebers ausführen können und derart an der Oberfläche des Objektträgers (OT) angebracht sind, dass bei Aufliegen des zu untersuchenden Objekts oder Teilen davon die mechanischen Eigenschwingungen behindert werden, und dass
— mit der Auswerteeinheit (AE) die empfangenen, in ihrer Intensität vom Objekt beeinflussten Frequenzen analysiert werden.

2. Sensorsystem nach Anspruch 1, dadurch gekennzeichnet, dass die zungenartigen Gebilde (f1 ... f6) durch U-förmige Ausnehmungen in der Ebene der Oberfläche des Objektträgers (OT) gebildet sind.

3. Sensorsystem nach Anspruch 1, dadurch gekennzeichnet, dass
— die zungenartigen Gebilde (f1' ... f6') durch aufgrund von rohrförmigen Ausnehmungen sich ergebende zylindrische Stäbe in Richtung des Querschnitts des Objektträgers (OT) gebildet sind.

4. Sensorsystem nach einem der vorhergehenden Ansprüche, dadurch gekennzeichnet, dass
— die Eigenresonanzen der zungenartigen Gebilde (f1 ... f6; f1' ... f6' nahe beieinander im Bereich der Sendefrequenz des Ultraschallgebers (UG) liegen.

5. Sensorsystem nach einem der Ansprüche 1 bis 3, dadurch gekennzeichnet, dass
— die Eigenresonanzen der zungenartigen Gebilde (f1 ... f6; f1' ... f6') jeweils bei der Grund- oder den Oberwellenfrequenzen des Ultraschall-·gebers (UG) liegen.

6. Sensorsystem nach einem der vorhergehenden Ansprüche, dadurch gekennzeichnet, dass
— die Sendefrequenz des Ultraschallgebers (UG) in einem vorgegebenen Frequenzbereich kontinuierlich durchstimmbar ist.

7. Sensorsystem nach einem der Ansprüche 1 bis 5, dadurch gekennzeichnet, dass
 – der Ultraschallgeber (UG einen Ultraschallimpuls aussendet, der aus einer Anzahl Einzelschwingungen unterschiedlicher Frequenz zusammengesetzt ist.

8. Sensorsystem nach einem der vorhergehenden Ansprüche, dadurch gekennzeichnet, dass
 – die Auswerteeinheit (AE) ein Fast-Fourier-Analysator (FFT-Analyser) ist, mit dem eine Bestimmung der Amplitude aller mit dem Ultraschallempfänger (UE) empfangenen Einzelfrequenzen durchführbar ist.

9. Sensorsystem nach einem der vorhergehenden Ansprüche, dadurch gekennzeichnet, dass
 – zwischen der Oberfläche des Objektträgers (OT) und dem zu untersuchenden Objekt (OB) eine elastische Folie (EF) mit noppenartigen Wölbungen (W) liegt, die sich bei Auflage des Objekts (OB) oder Teilen davon dicht an die Oberfläche des Objektträgers anschmiegt und dadurch die Schwingungen behindert.

## Revendications

1. Système de capteurs pour examiner la position et/ou le contour d'un objet à l'aide d'ultrasons, du type dans lequel
 – l'objet à examiner (OB) est disposé dans la voie de transmission entre le générateur des ultrasons (UG) et le récepteur des ultra-sons (UE), et
 – comportant une unité d'évaluation (AE) pour analyser les influences exercées sur les paramètres des sons par l'objet (OB) caractérisé par le fait que
 – l'objet (OB) repose sur un support d'objet (OT) de part et d'autre duquel se font face le générateur d'ultrasons (UG) et le récepteur des ultra-sons,
 – la voie de transmission du son s'étendant à travers le support d'objet (OT), parallèlement à la surface d'appui de l'objet (OB) sur le support d'objet (OT),
 – le support d'objet (OT) présente des structures en forme de languettes (f1 ... f6; f1' ... f6') qui peuvent exécuter des oscillations mécaniques propres dans la plage des fréquences du générateur des ultra-sons et qui sont disposées de telle façon sur la surface des supports de l'objet (OT) que lorsque l'objet à examiner ou des parties de ce dernier reposent sur ledit support, les oscillations mécaniques propres sont contrariées, et que
 – les fréquences reçues et dont les intensités ont été influencées par l'objet, sont analysées à l'aide de l'unité d'évaluation (AE).

2. Système de capteurs selon la revendication 1, caractérisé par le fait que les structures en forme de languettes (f1 ... f6) sont formées par des ouvertures ménagées dans le plan de la surface du support d'objet (OT).

3. Système de capteurs selon la revendication 1, caractérisé par le fait que les structures en forme de languette (f1' ... f6') sont formées par des tiges cylindriques s'étendant dans la direction de la section transversale du support d'objet (OT) et résultant d'ouvertures de forme tubulaire.

4. Système de capteurs selon l'une des revendications précédentes, caractérisé par le fait que les résonances propres des structures en forme de languettes (f1 ... f6; f1' ... f6') se situent les unes près des autres dans la plage des fréquences d'émission du générateur des ultra-sons (UG).

5. Système de capteurs selon l'une des revendications 1 à 3, caractérisé par le fait que les résonances propres des structures en forme de languettes (f1 ... f6; f1' ... f6') se situent respectivement au niveau des fréquences des ondes fondamentales ou harmoniques du générateur des ultra-sons (UG).

6. Système de capteurs selon l'une des revendications précédentes, caractérisé par le fait que la fréquence d'émission du générateur des ultra-sons (UG) sont susceptibles d'être accordées de façon continue dans une plage de fréquences donnée à l'avance.

7. Système de capteurs selon l'une des revendications 1 à 5, caractérisé par le fait que le générateur des ultra-sons (UG) émet une impulsion ultrasonore qui est composé d'un certain nombre d'oscillations individuelles ayant des fréquences différentes.

8. Système de capteurs selon l'une des revendications précédentes, caractérisé par le fait que l'unité d'évaluation (AE) est un analyseur de la fonction Fourier-rapide (analyseur FFT), à l'aide duquel il est possible de procéder à une détermination des amplitudes de toutes les fréquences individuelles reçues à l'aide du récepteur des ultra-sons (UE)

9. Système de capteurs selon l'une des revendications précédentes, caractérisé par le fait qu'entre la surface du support d'objet (OT) et l'objet à examiner (OB) est prévue une feuille élastique (EF) à bombement (W) en forme de noppes, laquelle feuille s'applique intimement contre la surface du support d'objet lorsque l'objet (OB) ou des parties de celui-ci reposent sur ledit support, et contrarie ainsi les oscillations.

## Claims

1. Sensor system for the examination of the condition and/or the contour of an object by means of ultrasound,
 – the object (OB) to be examined being arranged in the transmission path between ultrasound emitter (UG) and receiver (UE), and
 – with an evaluation unit (AE) for analyzing the influences on the sound parameters, caused by the object (OB), characterized in that,
 – the object (OB) rests upon an object carrier (OT), on the sides of which, facing each other, the ultrasound emitter (UG) and receiver (UE) are attached, – the transmission path of the sound running through the object carrier (OT) parallel to the bearing surface of the object (OB) on the object carrier (OT), in that
 – the object carrier (OT) has tongue-like parts (f1 ... f6; f1' ... f6') which can carry out natural mechanical oscillations in the frequency range of the ultrasound emitter and which are arranged on the surface of the object carrier (OT) in such a way that when the object to be examined or parts thereof are rested upon them, the natural mechanical oscillations are impeded, and in that

– the received frequencies, influenced in their intensity by the object, are analyzed with the evaluation unit (AE).

2. Sensor system according to claim 1, characterized in that

– the tongue-like parts (f1 ... f6) are formed by U-shaped cutouts in the plane of the surface of the object carrier (OT).

3. Sensor system according to claim 1, characterized in that

– the tongue-like parts (f1' ... f6') are formed by cylindrical bars, resulting from tubular cutouts, in the direction of the cross-section of the object carrier (OT).

4. Sensor system according to one of the preceding claims, characterized in that

– the natural resonances of the tongue-like parts (f1 ... f6; f1' ... f6') lie close to each other in the transmission frequency range of the ultrasound emitter (UG).

5. Sensor system according to one of claims 1 to 3, characterized in that

– the natural resonances of the tongue-like parts (f1 ... f6; f1' ... f6') in each case lie at the fundamental frequency or at the harmonic frequencies of the ultrasound emitter (UG).

6. Sensor system according to one of the preceding claims, characterized in that

– the transmission frequency of the ultrasound emitter (UG) can be continuously tuned in a specified frequency range.

7. Sensor system according to one of claims 1 to 5, characterized in that

– the ultrasound emitter (UG) sends out an ultrasound impulse which is composed of a number of individual oscillations of differing frequencies.

8. Sensor system according to one of the preceding claims, characterized in that

– the evaluation unit (AE) is a Fast-Fourier-analyzer (FFT-analyzer), with which a determination of the amplitude of all individual frequencies received with the ultrasound receiver (UE) can be carried out.

9. Sensor system according system according to one of the preceding claims, characterized in that

– between the surface of the object carrier (OT) and the object (OB) to be examined, there lies an elastic film (EF) with knob-like curvatures (W), which, when the object (OB) or parts thereof are put on it, clings tightly to the surface of the object carrier and thereby impedes the oscillations.

·1/2

FIG1

FIG 2

2/2

FIG 3

FIG 4